(19) Europäisches Patentamt
European Patent Office
Office européen des brevets

(11) **EP 4 565 809 B1**

(12) **EUROPEAN PATENT SPECIFICATION**

(45) Date of publication and mention
of the grant of the patent:
**11.02.2026 Bulletin 2026/07**

(21) Application number: **23754373.1**

(22) Date of filing: **01.08.2023**

(51) International Patent Classification (IPC):
**F16M 11/04** *(2006.01)* **F16M 11/10** *(2006.01)*
**G03B 17/56** *(2021.01)*

(52) Cooperative Patent Classification (CPC):
**F16M 11/041; F16M 11/10; G03B 17/561;**
F16M 2200/041

(86) International application number:
**PCT/GB2023/052034**

(87) International publication number:
**WO 2024/028594 (08.02.2024 Gazette 2024/06)**

(54) **BALANCE MECHANISM MOUNTING APPARATUS**

VORRICHTUNG ZUR MONTAGE EINES AUSGLEICHSMECHANISMUS

APPAREIL DE MONTAGE DE MÉCANISME D'ÉQUILIBRAGE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **05.08.2022 GB 202211467**

(43) Date of publication of application:
**11.06.2025 Bulletin 2025/24**

(73) Proprietor: **Videndum Plc**
**Bury St Edmunds IP32 7BY (GB)**

(72) Inventors:
• **MURROW, Andrew Derek**
**St Edmunds Suffolk IP33 2LZ (GB)**
• **TORBITT, Jolyon Francis**
**St Edmunds Suffolk IP29 5QU (GB)**

(74) Representative: **ip21 Ltd**
**Central Formalities Department**
**Suite 2**
**The Old Dairy**
**Elm Farm Business Park**
**Wymondham**
**Norwich, Norfolk NR18 0SW (GB)**

(56) References cited:
**US-A- 4 955 568**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the invention

The present inventive concept relates to a balance mechanism with wide ranging application, especially in the audio-visual sector. It provides a tiltable mounting for payloads, for example cameras.

Background to the invention

Pan and tilt heads are commonly used to support cameras in the film, streaming and broadcast industries. A camera and lens are mounted on a rotatable and tiltable support member so that they may be moved by the camera operator. A restoring torque means is provided to counteract the out of balance moment which occurs due to the weight of the camera as the platform is tilted, and on some heads this means is so arranged that the out of balance moment caused by the tilting of the camera is exactly balanced by the restoring torque means through the operating range of the head. Such a head is said to be "perfectly balanced" as the camera and lens may be moved by the operator to any tilt angle and will then remain at that angle without the operator having to apply a balancing moment.

Previous patents have disclosed means to provide the restoring torque means through the application of various mechanical systems which generate the correct restoring moment at any tilt angle by the compression of a spring and the reaction of the resulting spring force through a non-linear mechanical linkage or coupling means. Such mechanical means can be arranged not only to provide the correct restoring torque but also be adjustable to operate correctly for different payloads where the mass and the height of the centre of the mass above the tilting platform may be different. Such a situation may occur for instance if a different camera and lens were mounted onto the platform.

There are several mechanical systems previously disclosed to use a spring to provide the correct restoring torque for a perfectly balanced head.

WO-A-03/081121 of The Vitec Group Plc discloses a tiltable mounting for a payload, with a platform to receive the payload. It discloses a spring driven means to control tilting of the platform either side of a neutral position around an axis of rotation of the mounting, in which a cam rotates with the mounting, and a cam follower moves a lever to convert rotation of the lever into linear movement to effect a spring.

EP-A-1640653 of Cartoni SpA discloses a tiltable mounting for a payload, having a connecting rod eccentric to an axis of rotation of the mounting and a wing element pivoted on one side and coupled to the connecting rod to follow its movement. A spring is coupled with the wing element so it can slide with respect to it for adjustment.

GB-A-2469199 of The Vitec Group Plc discloses an arrangement in which a spring provides a counterbalancing force on rotation of a platform, the spring being mounted eccentrically with respect to an axis of rotation of the platform, the spring tension being adjustable by a lead screw coaxial with the spring.

As background, US-A-4955568 of O'Connor discloses a camera panhead, for panning the camera about a vertical axis and tilting the camera about a horizontal axis, including fluid drag systems and a counterbalance system.

Important attributes for a balance mechanism for a tilting camera platform include how the system may be adapted to balance different weights or different centre of mass heights of the payload, to cater for different cameras and lenses; the working tilt angle of the platform when balanced which would preferably be plus or minus 90 degrees; the minimum and maximum payloads which can be balanced; the dimensions of the mechanism which preferably is compact enough to fit under the tiltable platform; the weight of the mechanism which is preferably as light as possible so that the head can be more easily carried; and the manufacturing cost of the unit.

The cited previous systems have drawbacks in one or more of these attributes which this invention seeks to improve upon.

The aim of the present inventive concept is to provide a balance mechanism mounting apparatus for a tiltable mounting to provide a counterbalancing force when a payload is tilted, which works with a wide range of payload weights and sizes and is precisely adjustable, compact and relatively easy to manufacture.

Summary of invention

The present inventive concept provides a mounting apparatus comprising a housing adapted to be removably attachable to a support means, the mounting apparatus further comprising a platform for supporting a payload, the platform being attached to a casing which is pivotally attached to the housing and rotatable with respect to the housing around an axis, wherein the casing has an annular cam arranged within it, the cam being arranged concentrically with the said axis and having an inner cam face, the apparatus further comprising a cam follower having a cam follower arm comprising a cam engagement surface adapted to engage with and follow the inner cam face on rotation of the cam around the said axis, the cam follower being attached pivotally to the housing at a pivot point which is eccentric from the said axis, the cam follower further having a yoke engagement surface between the pivot point and the cam engagement surface which is adapted to engage a yoke and to transfer force between the cam follower and the yoke, the yoke engaging the yoke engagement surface at a yoke engagement point, the yoke being adapted to engage a spring arrangement and transfer force between the yoke engagement surface and the spring arrangement, so that rotation of the casing relative to the housing provides a transmittal of a force between the platform and the spring arrangement, wherein the spring arrangement is arranged with a spring arrangement axis substantially orthogonally with respect to the axis of cam rotation.

In use, tilting of the platform causes the casing to rotate around the axis and relative to the housing, which remains stationary. Rotation of the casing causes the annular cam to move the cam follower and in turn transfer force between the cam follower and the yoke which in turn engages the spring arrangement. Thus, the spring arrangement can resist the rotation of the casing relative to the housing when the platform is tilted. This in turn resists tilting movement of the platform.

As described, the cam follower forms a single-sided lever, with the cam engagement surface and the yoke engagement surface on the same side of the pivot point ; the pivot point of the cam follower forms a fulcrum..

The said support is not within the scope of this inventive concept and may be of known type such as a tripod or the like.

The cam follower, yoke and spring arrangement may be generally attached to the housing and not directly to the casing so that they do not rotate with the casing as the casing is rotated on tilting.

An annular cam and cam follower arrangement provides a more precise and more accurate arrangement than previously known arrangements. The arrangement also can be lighter.

The spring arrangement may be arranged substantially orthogonally with respect to the axis of cam rotation. This arrangement provides a direct coupling of payload force to the spring arrangement, providing a simpler and lighter mechanism than previously known arrangements, especially those in which the force has to in effect be turned through 90 degrees. The arrangement also provides for a compact arrangement within the casing.

The spring arrangement may be arranged substantially perpendicularly to the platform, when the platform is in a neutral position - i.e. when the platform is substantially horizontal in use the spring arrangement may be arranged substantially vertically. The spring arrangement axis would thus be perpendicular to the axis of cam rotation in two planes.

The spring arrangement may alternatively be arranged so that the spring arrangement axis is at an angle to the perpendicular to the platform, whilst still being orthogonal to the axis of cam rotation as described. In other words the spring arrangement may have a neutral position within the housing with the spring arrangement axis orthogonal to the axis of cam rotation but the spring arrangement axis non vertical in a neutral position.

A spring arrangement axis at an angle of 23 degrees to the perpendicular (vertical when the platform is in a neutral position - i.e. substantially horizontal) has been found to be advantageous. Other angles are possible between zero and 90 degrees to the perpendicular.

The angle of the spring arrangement axis relative to the perpendicular to the platform generally cannot be adjusted by a user - the said angle is generally fixed within each exemplary unit of the apparatus.

The spring arrangement is generally selected to provide a spring force to balance forces when a payload is tilted, so that when the payload is tilted the payload does not drop rapidly under gravity. Thus, a user can carefully control the amount by which the payload is tilted - which is useful when using a camera for example.

The spring arrangement may comprise two springs. Optionally the spring arrangement may comprise more than two springs. Preferably the spring arrangement comprises two or more springs arranged in parallel to one another. Springs in parallel give rise to a good trade-off between spring force and the risk of coil binding. Optionally the spring arrangement may comprise two or more springs arranged coaxially with one another.

The yoke engagement surface of the cam follower may have a substantially planar portion.

The yoke may comprise a spring roller having a cylindrical portion in the region where the yoke engages with the yoke engagement surface of the cam follower, wherein the spring roller is rotatable. The spring roller may thus roll along the yoke engagement surface of the cam follower as the cam follower moves. This rolling action facilitates a smooth engagement between the cam follower and the yoke.

The spring arrangement and yoke may be mounted on a slider block which is adapted to be moveable with respect to the housing. Thus, the spring arrangement, especially the yoke, can be moved with respect to the yoke engagement surface of the cam follower. Preferably, the slider block is adapted to be moveable in a plane of the pivoting action of the cam follower. For a particular position of the slider block, the yoke and the yoke engagement surface of the cam follower engage at a particular distance from the pivot point of the cam follower. When the slider block is moved to a different position, the yoke engages with the yoke engagement surface of the cam follower at a different distance from the pivot point of the cam follower. The distance between the pivot point to the cam engagement surface of cam follower is substantially fixed. Thus, the mechanical advantage of the lever between the force on the cam and the force on the springs can be varied. This provides the advantage that the resistance to rotation of the cam on tilting of the platform can be varied. This is useful because the balance mechanism of the present inventive concept can be used with a range of payload masses and centre of mass heights.

With careful adjustment of the position of the slider block, the mounting apparatus can provide a substantially balanced arrangement so that a user can tilt the payload precisely and in a stable way so that when the user stops applying force to the payload the platform stops moving.

The slider block may be moveable by way of a balance adjuster, for example comprising a threaded rod. Rotation thereof causes the slider block to move relative to the housing. The balance adjuster may further comprise a balance adjuster wheel. A wheel can provide mechanical advantage to ease the rotation of the rod. The balance adjuster may be mounted with respect to the housing so that it does not move on tilting of the platform.

The profile and/or circumference of the inner cam face can be arranged to move the cam follower in a specific relationship to a tilting angle of the platform.

The shape and/or dimensions of the cam follower can be arranged so that the cam engagement surface is moved in a specific relationship to a tilting angle of the platform.

The skilled reader will appreciate that the inventive concept could be arranged so that instead, on tilting of the platform, the cam remains stationary and cam follower and spring arrangement rotates with the platform. This arrangement could be advantageous for example if the balance adjuster were to be mounted with respect to the casing or platform instead of the housing. The skilled reader will appreciate that this suggested alternative arrangement is an equivalent which is intended to fall within the scope of the present inventive concept.

The cam as described above could be described as a first cam in an arrangement wherein a second cam is also provided within the mounting apparatus.

The mounting apparatus may comprise two annular cams substantially as described above, arranged within the casing co-axially. In other words, a second cam may be provided within the casing co-axially with the first said cam which is substantially identical to the first said cam. In such an arrangement each of the two cams can have a cam follower with a cam engagement surface, the cam followers in turn being connected to a single common lever and yoke engagement surface adapted to engage with a single common yoke. Alternatively, a mounting apparatus having two annular cams may comprise a discrete cam follower as described above associated with the respective annular cam.

In the example described, the cam follower forms a single-sided lever in which the two load points (the cam engagement surface and the yoke engagement point) are on the same side of the pivot point. A skilled practitioner will note that in another embodiment a two-sided lever arrangement may be chosen, in which the two load points are situated on opposite sides of the pivot point.

Some important advantages of the described embodiments are:

- Perfect or near-perfect balance - by selecting a suitable cam profile, this mechanism will accurately counterbalance different masses and heights of payload over the entire operating range.

- Wide angle of tilt - this mechanism can be arranged to provide plus or minus 90 degrees tilt. Previous mechanisms can mechanically bind at a lower tilt angle which is disadvantageous. The possibility of tilting the platform vertically upwards and/or downwards is advantageous.

- A wide range of payload weights can be balanced - a prototype of this mechanism can balance payloads down to zero weight and to greater than 25kg. This is unusual in a single balance mechanism and means that a single mounting can replace several previous designs each with narrower payload ranges . This is due to the simple and wide range adjustment mechanism (hence can go down to zero without the mechanism binding) and the short and direct load paths which reduce the forces which need to be contained by the mechanism and hence its bulk.

- Compact packaging - using two cams with the lever and springs between keeps the internal loads down and removes any twisting moments that need to be contained by the mechanism. It also maximises the use of the space underneath the platform. The mechanism also provides for a simple and direct adjustment mechanism (by moving the spring arrangement), and a simple integration with a damper mechanism which can be added on the outside of the platform hinge bearings.

- Ease of manufacture - there is a modest number of components and all are simple to manufacture leading to a low cost of manufacture.

Detailed description of the invention

Figure 1 shows the basic principle of this mounting apparatus.

Figure 2 shows an embodiment of the invention configured within a typical pan and tilt head.

Figure 3 is another view of the same embodiment, showing how the lever ratio and hence the balancing force is adjusted. Other arrangements of the adjustment mechanism are also possible (rack & pinion, screw & nut, cam).

Figure 4 is a view of an embodiment of the invention where two cams are used, one on either side of the cam follower and spring mechanism. This balances the forces on the cam follower and reduces the forces on the cam to reduce manufacturing costs and weight.

Figure 5 shows an alternative embodiment of the mounting apparatus of the present invention.

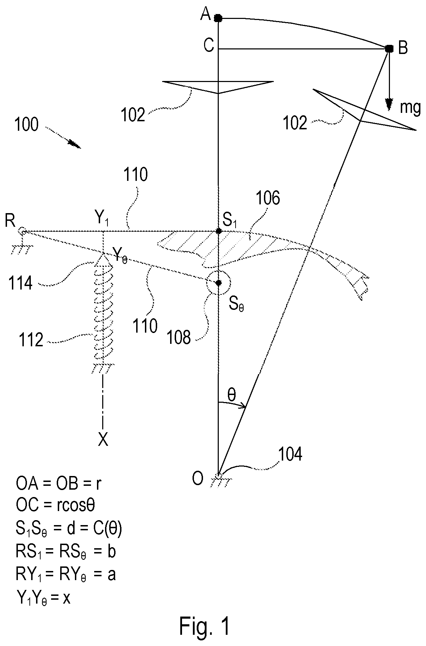

The principle of the inventive concept is best described by referring to Figure 1 which shows certain key elements only in a schematic way of an embodiment of the mounting apparatus. In Figure 1, key elements are shown in two discrete positions intended to represent a first position and a second position which should be clear to the skilled reader when taking into account the description and the drawing together. Figure 1 is not to scale and is presented to aid understanding of the operation of the balance mechanism.

The mounting apparatus 100 has a tiltable platform 102, having a pivot point 104 - an axis marked as O. When the platform 102 is in the first position directly above the pivot point 104 a payload (not directly shown) has a centre of mass A. As the platform 102 is tilted in use through an angle $\theta$, the payload centre of mass is displaced to B. The distance OA is equal to the distance OB and is shown as r, and the new height above O of the payload is shown by OC which by trigonometry is equal to $r\cos(\theta)$.

Also attached to the tiltable platform 102 and rotating about the same pivot point is the cam 106 (here only a section of the cam is shown for clarity). A roller 108 (part of a cam follower 110) can be displaced by the cam 106 on movement thereof, due to the inner profile of the cam 106. The cam follower 110 is pivoted at R and as the roller 108 rolls on the inside of the cam 106 the cam follower 110 is displaced due to the displacement of the roller 108. When $\theta$ is zero the roller 108 is at $S\_1$, and when at angle $\theta$ the roller is at $S\_\theta$. The end of the cam follower 110 is thus displaced a distance d from $S\_1$ to $S\_\theta$. The length of the cam follower $RS\_1 = RS\_\theta = b$.

A restoring spring 112 bears on the lever 110 at an engagement point 114 along the length of the cam follower 110. The spring 112 has a spring axis X, which is substantially orthogonal to the axis of rotation O. The distance from the lever pivot point R to the engagement point 114 is $a$ and can be adjusted. When the platform 102 is tilted, the roller end of the cam follower 110 is displaced by the cam a distance $d$, and by geometry the engagement point 114 is displaced a distance $x=da/b$.

As the platform 102 is tilted, so the absolute height above the ground of the payload centre of mass will change. In this case the angle of tilt is $\theta$, and the payload has moved down which has reduced its potential energy by $mgr(1-cos(\vartheta))$, where m is the mass of the payload, r the distance of the centre of mass from the platform's tilt hinge, and $g$ the gravitational constant.

For the platform 102 and payload to remain balanced, the potential energy lost by the payload must be equalled by the elastic energy gained by the restoring spring. This spring energy gain is equal to $\frac{1}{2}kx^2$ where x is the deflection of the spring.

x depends upon the lever ratio and the cam function. There are several ways to define the cam profile. In this example we define it according to the end deflection d of the cam follower for a given angle $\theta$ of the cam: $d=C(\theta)$.

If the cam function is C($\theta$), then $x=a/b\ C(\theta)$, where b is the total length of the cam follower and $a$ the distance from the pivot point to the spring fulcrum. Thus for balance

$$\frac{1}{2}k\left(\frac{a}{b}C(\theta)\right)^2 = mgr(1-\cos(\theta))$$ , and if

the cam profile is arranged such that $C(\theta)=\sqrt{(c(1 - \cos(\theta)))}$ where c is a constant then balance can be achieved by adjusting $a$ such that $a = b\sqrt{(2mgr/ck)}$.

In this equation $b,c,k$ are all constants set by the geometry of the mechanism and $g$ is a universal constant. The cam profile C($\theta$) is only dependent on $\theta$ and hence will not vary for different configurations of the payload or adjustments. m and r are the mass and the height of the payload, and so if $a$ is adjusted to balance them in any one position then the payload will be balanced for any tilt angle $\theta$.

The equation also shows how the mechanism can balance very small payloads, down to a zero-mass payload. If m is zero, then the equation shows that balance can be achieved by setting $a$ to be zero. Practically this would mean moving the yoke engagement point on the cam follower to be coincident with the pivot point.

The maximum payload which can be completely balanced will be when $a$ is at its maximum. It is practically feasible to extend the yoke engagement point to beyond the cam engagement surface, so that $a>b$, and the payload moment which can then be balanced $mgr = a^2ck/2b^2$.

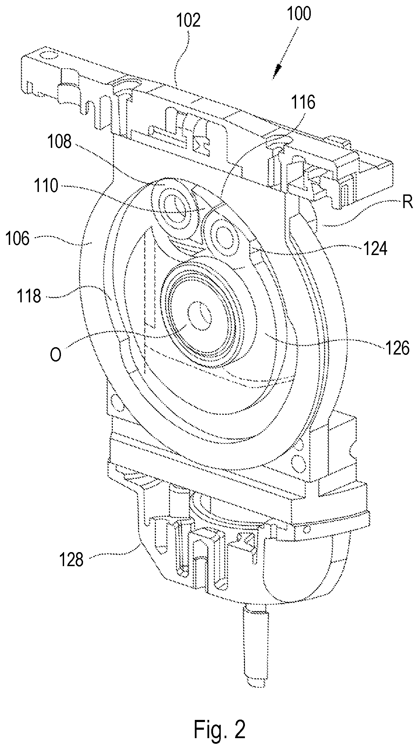

Figure 2 shows an embodiment of the balance mechanism 100 in a practical implementation the within a pan & tilt head, showing a vertical section through the head.

The tiltable platform 102 rotates around an axis O. A cam 106 has an annular inner cam face 118; the cam 106 is arranged coaxially with the axis O and fixed to the platform 102. A cam follower (110 and 116) is attached at one end to a roller 108; the roller 108 rolls around the cam face 118 when the cam 106 is rotated. The other end of the cam follower is pivoted at R. The cam follower 116 also has a yoke engaging surface (not clearly shown in Figure 2) which has a flat section. A yoke (also not clearly shown in Figure 2) has a spring roller 124 attached thereto which is in turn attached to a double spring block 126. The yoke bears against a flat section of the cam follower 116 for adjusting the balance. The balancing mechanism 100 can be attached to a tripod via a bowl mounting 128 and a pan bearing (not shown).

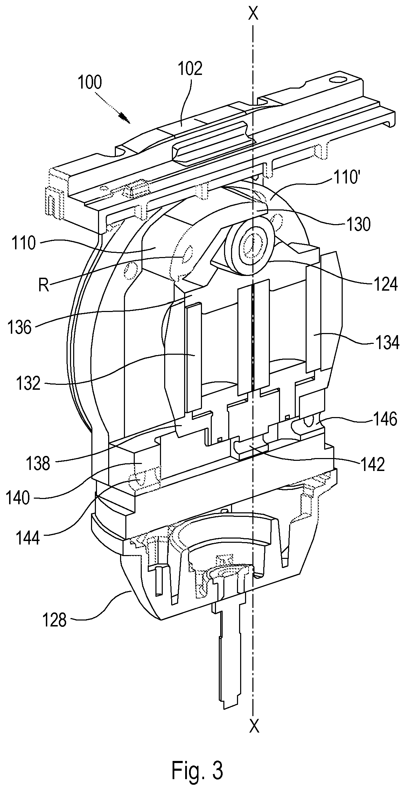

Figure 3 shows a different section through the same embodiment as shown in Figure 2. In use, the platform 102 drives the cam 106 (not shown) and hence the cam follower 110 through a roller 108 (not shown) and the pivot R. The cam follower 110 is displaced at its other end 110' by movement of the cam 106; the cam follower 110 has a flat section 130 along which the spring roller 124 can move. The spring roller 124 drives two springs 132, 134 through a yoke 136, and these springs bear against a slider block 138 which slides on a base block 140. The two springs 132, 134 form a spring arrangement having a spring arrangement axis X. The spring arrangement axis X is substantially orthogonal to the axis of cam rotation O (shown in Figure 2). Adjustment is performed by sliding the slider block 138 and hence the point on the flat section 130 of the cam follower 110 where the spring roller 124 bears against the cam follower 110. The slider block 138 position is adjusted by a threaded rod (not shown) which locates in a threaded section 142 of the slider block 138 and has two bearings 144 and 146 in the base block 140. An adjustment knob is located on the end of the threaded rod so that rotating the knob displaces the sliding block 138 and hence the point where the spring roller 124 contacts the cam follower 110. The balancing mechanism 100 can be attached to a tripod via a bowl mounting 128 and a pan bearing (not shown).

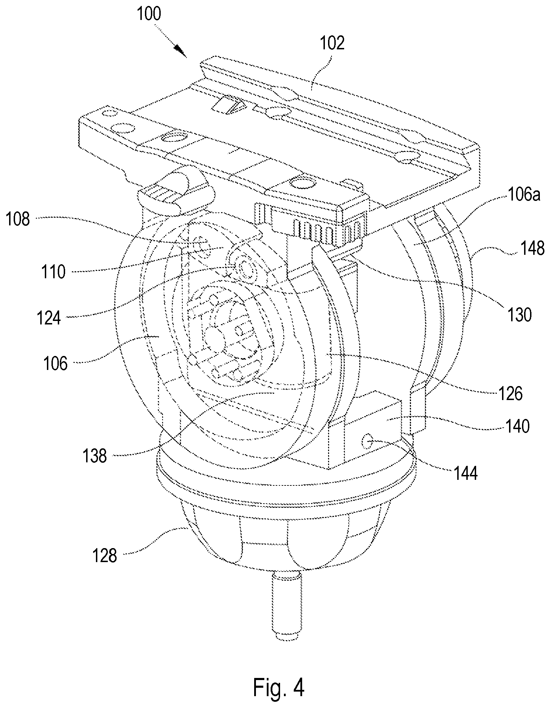

Figure 4 shows an embodiment where two cams 106 and 106a are used, equally disposed around a single central cam follower 110 and spring block 126. In use, the platform 102 drives the cams 106 and 106a and hence the cam follower 110 through a roller 108 and the pivot R (not shown). The cam follower 110 is displaced at its other end (not shown) by movement of the cams 106 and 106a; the cam follower 110 has a flat section 130 along which the single spring roller 124 can move. The spring roller 124 drives two springs 132, 134 through a yoke 136, and these springs bear against a slider block 138 which slides on a base block 140. The cam follower is arranged with a second roller (not shown) in respect of cam 106a. Adjustment of the balance is performed by sliding the slider block 138 and hence the point on the flat section 130 of the cam follower 110 where the spring roller 124 bears against the cam follower 110. The slider block 138 position is adjusted by a threaded rod (not shown) which locates in a threaded section 142 (not shown) of the slider block 138 and has two bearings 144 and 146 (not shown) in the base block 140. An adjustment knob is located on the end of the threaded rod so that rotating the knob displaces the sliding block 138 and hence the point where the spring rollers 124 contacts the cam follower 110. Figure 4 also shows how a drag mechanism 148 (which is not the subject of the present application) can be conveniently located on the outside of the balance mechanism 100. The balancing mechanism 100 can be attached to a tripod via a bowl mounting 128 and a pan bearing (not shown).

Note that in the examples shown and described, the spring and cam follower mechanism is stationary and the cams rotate with the tilting platform. This enables the adjustment knob to be in a fixed location on the balance mechanism. The springs are shown vertical but may be located at any angle in the plane orthogonal to the tilt axis to assist packaging or adjustment knob location.

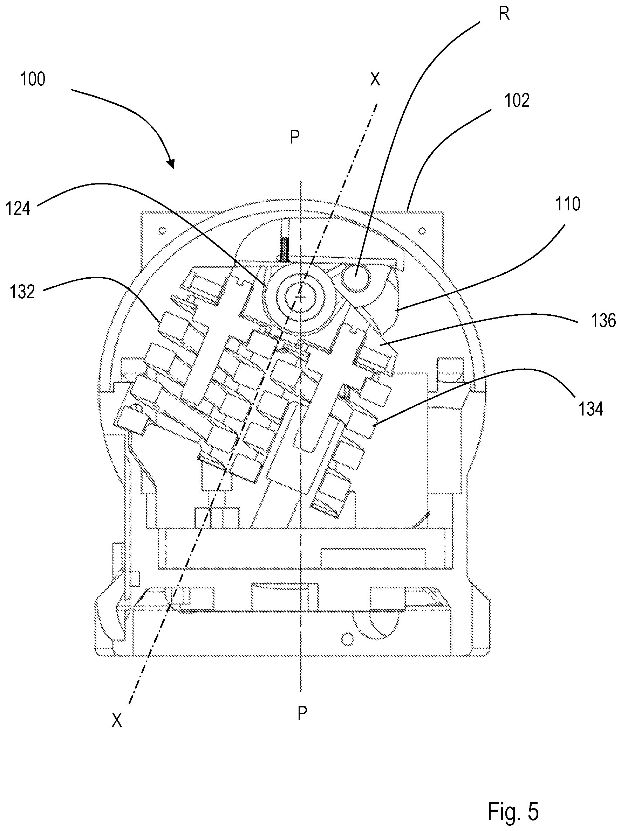

Figure 5 shows an alternative arrangement to that shown in Figures 2 and 3, in which the spring arrangement is arranged so that the spring arrangement axis X is at an angle to the perpendicular P to the platform 102, whilst still being orthogonal to the axis of cam rotation as described. Figure 5 is presented without some of the other features described herein and shown in other drawings, to aid clarity.

Figure 5 shows a mounting apparatus 100 in which the platform 102 drives the cam and hence the cam follower 110 through a roller 108 (not shown) and the pivot R. The cam follower 110 is displaced at its other end by movement of the cam; the cam follower 110 has a flat section along which the spring roller 124 can move. The spring roller 124 drives two springs 132, 134 through a yoke 136, and these springs bear against a slider block which slides on a base block as described herein. The two springs 132, 134 form a spring arrangement having a spring arrangement axis X. The spring arrangement axis X is substantially orthogonal to the axis of cam rotation O (not shown in Figure 5, but as in Figure 2). The spring arrangement axis X is at an angle to the perpendicular P to the platform 102 as denoted by the respective dashed lines shown in Figure 5. In this example, the angle of the spring arrangement axis X is approx. 23 degrees to the perpendicular P. Adjustment of the mounting apparatus 100 is performed by sliding the slider block and hence the point on the flat section of the cam follower 110 where the spring roller 124 bears against the cam follower 110, as described herein. The slider block position is adjusted by a threaded rod which locates in a threaded section of the slider block and has two bearings in the base block. An adjustment knob is located on the end of the threaded rod so that rotating the knob displaces the sliding block and hence the point where the spring roller 124 contacts the cam follower 110. The balancing mechanism 100 can be attached to a tripod via a bowl mounting and a pan bearing.

As can be seen in Figure 5, the spring arrangement has a neutral position within the housing with the spring arrangement axis X orthogonal to the axis of cam rotation and the spring arrangement axis X non vertical when the platform 102 is in a neutral position - i.e. substantially horizontal. In Figure 5, the spring arrangement is at approx. 23 degrees to the vertical P in a neutral position, which has been found to be advantageous.

## Claims

1. A mounting apparatus (100) comprising a housing adapted to be removably attachable to a support means, the mounting apparatus (100) further comprising a platform (102) for supporting a payload, the platform (102) being attached to a casing which is pivotally attached to the housing and rotatable with respect to the housing around an axis, the casing having an annular cam arranged within it, the cam (106) being arranged concentrically with the said axis and having an inner cam face (118), the apparatus further comprising a cam follower (110) comprising a cam engagement surface adapted to engage with and follow the inner cam face (118) on rotation of the cam (106) around the said axis, the cam follower (110) further having a yoke engagement surface adapted to engage a yoke (136) and to transfer force between the cam follower (110) and the yoke (136), the yoke (136) engaging the yoke engagement surface at a yoke engagement point, the yoke (136) being adapted to engage a spring arrangement and transfer force between the yoke engagement surface and the spring arrangement, so that rotation of the casing relative to the housing provides a transmittal of a force between the platform (102) and the spring arrangement, the mounting apparatus (100) being **characterised in that** the cam follower (110) is attached pivotally to the housing at a pivot point (104) which is eccentric from the said axis and **in that** the spring arrangement is arranged with a spring arrangement axis substantially orthogonally with respect to the axis of cam (106) rotation.

2. A mounting apparatus (100) according to claim 1, wherein the cam follower (110), yoke (136) and spring arrangement are generally attached to the housing and not directly to the casing so that they do not rotate with the casing as the casing is rotated on tilting.

3. . A mounting apparatus (100) according to any preceding claim, wherein the spring arrangement is arranged substantially perpendicularly to the platform (102), when the platform (102) is in a neutral position.

4. A mounting apparatus (100) according to any preceding claim, wherein the spring arrangement comprises two springs.

5. A mounting apparatus (100) according to claim 4, wherein the spring arrangement comprises two or more springs arranged in parallel to one another.

6. A mounting apparatus (100) according to any preceding claim, wherein the yoke engagement surface of the cam follower (110) has a substantially planar portion.

7. A mounting apparatus (100) according to any preceding claim, wherein the yoke (136) comprises a spring roller (124) having a cylindrical portion in the region where the yoke engages with the yoke engagement surface of the cam follower (110), wherein the spring roller (124) is rotatable.

8. A mounting apparatus (100) according to any preceding claim, wherein the spring arrangement and yoke (136) are mounted on a slider block (138) which is adapted to be moveable with respect to the housing.

9. A mounting apparatus (100) according to claim 8, wherein the slider block (138) is adapted to be moveable in a plane of the pivoting action of the cam follower (110).

10. A mounting apparatus (100) according to claim 8 or claim 9, wherein the slider block (138) is moveable by way of a balance adjuster.

11. A mounting apparatus (100) according to claim 10, wherein the balance adjuster further comprises a balance adjuster wheel.

12. A mounting apparatus (100) according to any preceding claim, wherein the spring arrangement is arranged with the spring arrangement axis at an angle to the perpendicular to the platform (102).

13. A mounting apparatus (100) according to claim 12, wherein the spring arrangement is arranged with the spring arrangement axis at an angle of approximately 23 degrees to the perpendicular to the platform (102).

14. A mounting apparatus (100) according to any preceding claim, wherein the mounting apparatus (100) comprises a second cam arranged within the casing co-axially which is substantially identical to the said cam.

15. A mounting apparatus (100) according to claim 14, wherein each of the two said cams (106) has a cam follower (110) with a cam engagement surface, the cam followers (110) in turn being connected to a single common lever and yoke engagement surface adapted to engage with a single common yoke.

16. A mounting apparatus (100) according to claim 14, wherein each of the annular cams comprises a discrete cam follower associated with the respective annular cam.

**Patentansprüche**

1. Montagevorrichtung (100) mit einem Gehäuse, das abnehmbar an einer Stützmittel angebracht werden kann, wobei die Montagevorrichtung (100) ferner eine Plattform (102) zum Tragen einer Nutzlast, wobei die Plattform (102) an einer Hülle befestigt ist, das schwenkbar an dem Gehäuse befestigt und in Bezug auf das Gehäuse um eine Achse drehbar ist, wobei die Hülle einen darin angeordneten ringförmigen Nocken aufweist,

wobei der Nocken (106) konzentrisch zu der Achse angeordnet ist und eine innere Nockenfläche (118) aufweist, wobei die Vorrichtung ferner einen Nockenstößel (110) umfasst, der eine Nockeneingriffsfläche aufweist, die so angepasst ist, dass sie bei einer Drehung des Nockens (106) um die Achse mit der inneren Nockenfläche (118) in Eingriff kommt und dieser folgt, wobei der Nockenstößel (110) ferner eine Jocheingriffsfläche aufweist, die so angepasst ist, dass sie mit einem Joch (136) in Eingriff kommt und Kraft zwischen dem Nockenstößel (110) und dem Joch (136) überträgt, das Joch (136) an einem Jocheingriffspunkt mit der Jocheingriffsfläche in Eingriff steht, wobei das Joch (136) so ausgelegt ist, dass es mit einer Federanordnung in Eingriff steht und Kraft zwischen der Jocheingriffsfläche und der Federanordnung überträgt, so dass eine Drehung der Hülle relativ zu dem Gehäuse eine Übertragung einer Kraft zwischen der Plattform (102) und der Federanordnung bewirkt, wobei die Montagevorrichtung (100) **dadurch gekennzeichnet ist, dass** der Nockenstößel (110) schwenkbar an dem Gehäuse an einem Drehpunkt (104) befestigt ist, der exzentrisch zu der genannten Achse ist, und dass die Federanordnung mit einer Federanordnungsachse im Wesentlichen orthogonal in Bezug auf die Achse der Nockendrehung (106) angeordnet ist.

2. Montagevorrichtung (100) nach Anspruch 1, wobei der Nockenstößel (110), das Joch (136) und die Federanordnung im Allgemeinen am Gehäuse und nicht direkt an der Hülle befestigt sind, so dass sie sich nicht mit der Hülle drehen, wenn die Hülle beim Kippen gedreht wird.

3. Montagevorrichtung (100) nach einem der vorhergehenden Ansprüche, wobei die Federanordnung im Wesentlichen senkrecht zur Plattform (102) angeordnet ist, wenn sich die Plattform (102) in einer neutralen Position befindet.

4. Montagevorrichtung (100) nach einem der vorangehenden Ansprüche, wobei die Federanordnung zwei Federn umfasst.

5. Montagevorrichtung (100) nach Anspruch 4, wobei die Federanordnung zwei oder mehr parallel zueinander angeordnete Federn umfasst.

6. Montagevorrichtung (100) nach einem der vorhergehenden Ansprüche, wobei die Jocheingriffsfläche des Nockenstößels (110) einen im Wesentlichen ebenen Abschnitt aufweist.

7. Montagevorrichtung (100) nach einem der vorhergehenden Ansprüche, wobei das Joch (136) eine Federrolle (124) umfasst, die einen zylindrischen Abschnitt in dem Bereich aufweist, in dem das Joch mit der Jocheingriffsfläche des Nockenstößels (110) in Eingriff steht, wobei die Federrolle (124) drehbar ist.

8. Montagevorrichtung (100) nach einem der vorhergehenden Ansprüche, wobei die Federanordnung und das Joch (136) an einem Gleitblock (138) angebracht sind, der so ausgelegt ist, dass er in Bezug auf das Gehäuse bewegt werden kann.

9. Montagevorrichtung (100) nach Anspruch 8, wobei der Gleitblock (138) in einer Ebene der Schwenkbewegung des Nockenstößels (110) bewegbar ist.

10. Montagevorrichtung (100) nach Anspruch 8 oder Anspruch 9, wobei der Gleitblock (138) über einen Ausgleichsregler beweglich ist.

11. Montagevorrichtung (100) nach Anspruch 10, wobei der Ausgleichsregler ferner ein Ausgleichsreglerrad umfasst.

12. Montagevorrichtung (100) nach einem der vorhergehenden Ansprüche, wobei die Federanordnung mit der Federanordnungsachse in einem Winkel zur Senkrechten zur Plattform (102) angeordnet ist.

13. Montagevorrichtung (100) nach Anspruch 12, wobei die Federanordnung mit der Federanordnungsachse in einem Winkel von etwa 23 Grad zur Senkrechten zur Plattform (102) angeordnet ist.

14. Montagevorrichtung (100) nach einem der vorhergehenden Ansprüche, wobei die Montagevorrichtung (100) einen zweiten Nocken umfasst, der koaxial innerhalb der Hülle angeordnet ist und im Wesentlichen mit dem Nocken identisch ist.

15. Montagevorrichtung (100) nach Anspruch 14, wobei jeder der beiden Nocken (106) einen Nockenstößel (110) mit einer Nockeneingriffsfläche aufweist, wobei die Nockenstößel (110) ihrerseits mit einem einzigen gemeinsamen Hebel und einer Jocheingriffsfläche verbunden sind, die zum Eingriff mit einem einzigen gemeinsamen Joch geeignet sind.

16. Montagevorrichtung (100) nach Anspruch 14, wobei jeder der ringförmigen Nocken einen diskreten Nockenstößel umfasst, der mit dem jeweiligen ringförmigen Nocken verbunden ist.

**Revendications**

1. Appareil de montage (100) comprenant un boîtier adapté pour être fixé de manière amovible à un moyen de support, l'appareil de montage (100) comprenant en outre une plateforme (102) pour supporter une charge utile, la plateforme (102) étant fixée à une enveloppe fixée de manière pivotante au boîtier et qui est rotative par rapport au boîtier autour d'un axe, l'enveloppe possédant dans son intérieur une came annulaire, la came (106) étant disposée concentriquement avec ledit axe et ayant une face de came intérieure (118), l'appareil comprenant en outre un suiveur de came (110) comprenant une surface d'engagement de la came adaptée pour s'engager avec et suivre la face de came intérieure (118) lors de la rotation de la came (106) autour dudit axe, le suiveur de came (110) ayant en outre une surface d'engagement de l'étrier adaptée pour s'engager avec un étrier (136) et pour transférer la force entre le suiveur de came (110) et l'étrier (136), l'étrier (136) s'engageant dans la surface d'engagement de l'étrier à un point d'engagement de l'étrier, l'étrier (136) étant adapté pour s'engager dans un agencement de ressorts et transférer la force entre la surface d'engagement de l'étrier et l'agencement de ressorts, de sorte que la rotation de l'enveloppe par rapport au boîtier assure la transmission d'une force entre la plateforme (102) et l'agencement de ressorts, l'appareil de montage (100) étant **caractérisé par le fait que** le suiveur de came (110) est fixé de manière pivotante au boîtier en un point de pivot (104) excentré par rapport audit axe et **par le fait que** l'agencement de ressorts est agencé avec un axe d'agencement de ressorts sensiblement orthogonal par rapport à l'axe de rotation de la came (106).

2. Appareil de montage (100) selon la revendication 1, dans lequel le suiveur de came (110), l'étrier (136) et l'agencement de ressorts sont généralement fixés au boîtier et non directement à l'enveloppe, de sorte qu'ils ne tournent pas avec l'enveloppe lorsque celle-ci est tournée lors du basculement.

3. Appareil de montage (100) selon l'une quelconque des revendications précédentes, dans lequel l'agencement de ressorts est disposé sensiblement perpendiculairement à la plateforme (102), lorsque la plateforme (102) est en position neutre.

4. Appareil de montage (100) selon l'une quelconque des revendications précédentes, dans lequel l'agencement de ressorts comprend deux ressorts.

5. Appareil de montage (100) selon la revendication 4, dans lequel l'agencement de ressorts comprend deux ressorts ou plus disposés parallèlement l'un à l'autre.

6. Appareil de montage (100) selon l'une quelconque des revendications précédentes, dans lequel la surface d'engagement de l'étrier du suiveur de came (110) présente une partie sensiblement plane.

7. Appareil de montage (100) selon l'une quelconque des revendications précédentes, dans lequel l'étrier (136) comprend un rouleau à ressort (124) ayant une partie cylindrique dans la région où l'étrier s'engage avec la surface d'engagement de l'étrier du suiveur de came (110), dans laquelle le rouleau à ressort (124) est rotatif.

8. Appareil de montage (100) selon l'une quelconque des revendications précédentes, dans lequel l'agencement de ressorts et l'étrier (136) sont montés sur un bloc coulissant (138) adapté pour être mobile par rapport au boîtier.

9. Appareil de montage (100) selon la revendication 8, dans lequel le bloc coulissant (138) est adapté pour être mobile dans un plan de l'action de pivotement du suiveur de came (110).

10. Appareil de montage (100) selon la revendication 8 ou la revendication 9, dans lequel le bloc coulissant (138) est mobile au moyen d'un régulateur d'équilibre.

11. Appareil de montage (100) selon la revendication 10, dans lequel le régulateur d'équilibre comprend en outre une roue de réglage de l'équilibre.

12. Appareil de montage (100) selon l'une quelconque des revendications précédentes, dans lequel l'agencement de ressorts est disposé avec l'axe de l'agencement de ressorts à un angle perpendiculaire à la plateforme (102).

13. Appareil de montage (100) selon la revendication 12, dans lequel l'agencement de ressorts est disposé avec l'axe de l'agencement de ressorts à un angle d'environ 23 degrés à la perpendiculaire à la plateforme (102).

14. Appareil de montage (100) selon l'une quelconque des revendications précédentes, dans lequel l'appareil de montage (100) comprend une deuxième came disposée à l'intérieur de l'enveloppe de manière coaxiale qui est sensiblement identique à ladite came.

15. Appareil de montage (100) selon la revendication 14, dans lequel chacune des deux cames (106) possède un suiveur de came (110) avec une surface d'engagement de la came, les suiveurs de came (110) étant à leur tour reliés à un levier commun unique et à une surface d'engagement de l'étrier adaptée pour s'engager avec un étrier commun unique.

16. Appareil de montage (100) selon la revendication 14, dans lequel chacune des cames annulaires comprend un suiveur de came discret associé à la

**EP 4 565 809 B1**

came annulaire respective.

OA = OB = r
OC = rcosθ
$S_1S_\theta = d = C(\theta)$
$RS_1 = RS_\theta = b$
$RY_1 = RY_\theta = a$
$Y_1Y_\theta = x$

Fig. 1

Fig. 2

Fig. 3

Fig. 4

Fig. 5

**EP 4 565 809 B1**

**REFERENCES CITED IN THE DESCRIPTION**

**Patent documents cited in the description**

- EP 1640653 A
- GB 2469199 A
- US 4955568 A